# EUROPEAN PATENT APPLICATION

(11) **EP 2 479 865 A1**
(43) Date of publication of application: **25.07.2012**
(21) Application number: 10815128.3
(22) Date of filing: 03.09.2010
(51) Int. Cl.: H02J 7/00, B60L 11/18, H01R 13/52

(54) **ELECTRIC POWER CONNECTOR**

(30) Priority: 14.09.2009 JP 2009211883
(71) Applicant: Nifco Inc., Yokohama-shi, Kanagawa 244-8522 (JP)
(72) Inventor: SATO, Masakazu, Yokohama-shi Kanagawa 244-8522 (JP)
(74) Representative: Gassner, Wolfgang
(86) International application number: PCT/JP2010/005436
(87) International publication number: WO 2011/030528

(57) **Abstract**

In an electric power connector, without requiring a special operation of a user, the electric power connector exposes an internal electric terminal at a starting time of charging, and also covers the internal electric terminal on completion of the charging so as to prevent from contacting with outside, or prevent water, dust, and the like from entering. A power supplying inlet (electric power connector) (1) has a structure of including a start-up member (3) adapted to displace by pressing a supplying nozzle (2) when connecting a supplying terminal and a receiving terminal; a shutter member (4) interlocking with the start-up member to displace between an open position exposing the receiving terminal, and a closed position covering the receiving terminal; and an urging device (5) urging the shutter member to a closed position side.

## Description

### FIELD OF TECHNOLOGY

The present invention relates to an electric power connector which houses an internal electric terminal which can be connected to an external electric terminal of an electric supplying end or an electric receiving end; specifically, the electric power connector suitable for a vehicle.

### BACKGROUND ART

Recently, vehicles such as hybrid cars, electric cars, and the like which travel by electric motors as a power source are drawing attention from a standpoint of an improvement in energy efficiency, a reduction of environmental burdens, and the like. In this kind of vehicle, there exists a vehicle provided with an electric storage device comprising a secondary battery and the like which can charge from an external power source. An electric supply terminal, which is the external electric terminal provided on a side of a power source for domestic use, or a quick electric charger for exclusive use, is connected to a receiving terminal, which is the internal electric terminal provided on a vehicle side, thereby implementing the charging from the external power source to the electric storage device.

The receiving terminal on the vehicle side is electrically connected to the high―voltage electric storage device, so that as for a power supplying inlet in which the receiving terminal is housed, in a case where the charging is not carried out, the receiving terminal is required to be covered to prevent from contacting with outside, or prevent water, dust, and the like from entering.

Thereby, for example, there is well-known an electric supplying inlet housing the receiving terminal disposed in a housing portion with an outer lid, which is openably and closably provided on a car body, and comprises an inner lid openably and closably supported by a turning axis to cover the receiving terminal; an urging spring urging the inner lid in an opening direction; and a pressing member pressing the inner lid to a receiving terminal side (a closing direction) against an urging force of the urging spring (see Patent Document 1). In the conventional electric supplying inlet, the inner lid which has become an open state by a detachment of the pressing member is fixed to a position which controls the turning thereof by abutting against the outer lid which has been operated to turn in the closing direction. Consequently, there is the advantage of preventing a user (a driver and the like) from forgetting to close the inner lid on completion of the charging.

### PRIOR ART DOCUMENT

### PATENT DOCUMENT

Patent Document 1: Japanese Unexamined Patent Publication No. 2009-27851

### SUMMARY OF THE INVENTION

### PROBLEMS TO BE SOLVED BY THE INVENTION

However, in the aforementioned conventional technology, when a user starts charging, the user is required to manually open the inner lid which covers the receiving terminal although the user can open the outer lid of the housing portion by an operation from a driver's seat. Also, the user is required to manually close the inner lid again on completion of the charging.

The present invention is made in view of the problems of the aforementioned conventional technology, and an object of the present invention is to provide an electric power connector which allows to expose the internal electric terminal by coming to an open state at a starting time of the charging, and also allows to cover the internal electric terminal by coming to a closed state on completion of the charging without requiring a special operation of the user.

### MEANS FOR SOLVING THE PROBLEMS

According to the first aspect of the present invention which has been made in order to solve the aforementioned problems, an electric power connector (1) housing an internal electric terminal connected to an external electric terminal of an electric supplying end or an electric receiving end, comprises a start-up member (3) which is displaced by being pressed by an external connector (2) housing the external electric terminal when the external electric terminal and the internal electric terminal are connected; a shutter member (4) interlocking with the start-up member, and being displaced between an open position exposing the internal electric terminal, and a closed position covering the internal electric terminal; and an urging device (5) urging the shutter member to the closed position side.

Also, according to a second aspect of the present invention, a displacement of the shutter member is carried out on a plane surface perpendicular to an abutting direction of the external connector.

Also, according to a third aspect of the present invention, the shutter member turns by interlocking with the start-up member by cam mechanisms (24 and 43).

Also, according to a fourth aspect of the present invention, the shutter member includes two split shutter members (4L and 4R), and the split shutter members respectively turn in a direction of separating from each other by interlocking with the start-up member.

Also, according to a fifth aspect of the present invention, the start-up member abuts against an outer peripheral border portion of the external connector when the supplying terminal and the internal electric terminal are connected.

Also, according to a sixth aspect of the present invention, the start-up member includes two split start-up members (3L and 3R), and the split start-up members respectively turn in the direction of separating from each other when the split start-up members abut against the external connector.

### EFFECT OF THE INVENTION

According to the first aspect of the present invention, without requiring the special operation of the user, at the starting time of the charging (i.e., when the supplying terminal and the internal electric terminal are connected), the external connector and the start-up member are abutted, so that the shutter member comes to the open state and exposes the internal electric terminal, and also on completion of the charging (i.e., when the supplying terminal and the internal electric terminal are disconnected), due to the urging of the urging device, the shutter member comes to the closed state and allows to cover the internal electric terminal again, thereby providing an excellent operation effect.
Also, according to the second aspect of the present invention, the displacement of the shutter member is carried out on the plane surface perpendicular to the abutting direction of an external nozzle, so that a size of the electric power connector in the abutting direction of the external nozzle can be reduced.
Also, according to the third aspect of the present invention, due to a simplified structure, on the plane surface perpendicular to the abutting direction of the external connector, the shutter member is movably interlocked with the displacement of the start-up member to the open position.
Also, according to the fourth aspect of the present invention, each split shutter member can be easily moved up to the open position on a surface vertical to the abutting direction of the external connector. Also, in an installation location of the electric power connector, there is the advantage that only a small space is required in a direction perpendicular to the abutting direction of the external connector.
Also, according to the fifth aspect of the present invention, without interfering with a movement of the external connector, at a time of the abutting against the external connector, the start-up member can be easily displaced.
Also, according to the sixth aspect of the present invention, the start-up member can be easily displaced at a time of the abutting against the outer peripheral border portion of the external connector.

### BRIEF DESCRIPTION OF THE DRAWINGS

Fig. 1 is a perspective view of an electric supplying inlet as an electric power connector according to the present invention.
Fig. 2 is a perspective view showing a left split start-up member constituting a start-up member.
Fig. 3 is a perspective view showing a right split start-up member constituting the start-up member.
Fig. 4 is a perspective view showing a left split shutter member constituting a shutter member.
Fig. 5 is a perspective view showing a right split shutter member constituting the shutter member.
Fig. 6 is a perspective view showing the shutter member in an opening start state.
Fig. 7 is a perspective view showing the shutter member in an opening completion state.
Fig. 8 is a plan view showing the shutter member in the opening start state.
Fig. 9 is a plan view showing the shutter member in the opening completion state.

### EMBODIMENTS FOR CARRYING OUT THE INVENTION

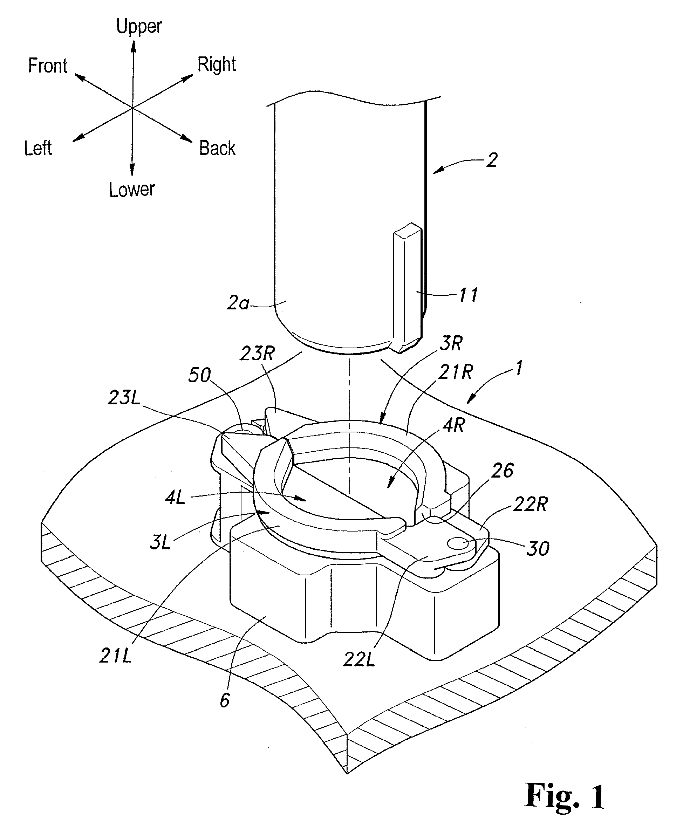

Hereinafter, a power supplying inlet as an electric power connector according to the present invention will be explained with reference to drawings. In the explanation, terms showing directions follow the directions shown by arrows in Fig. 1. Also, as for members (or portions) disposed on right and left as a pair, suffixes (L or R) showing the right and left are assigned to the respective numerals, for example, a start-up member 3L and a start-up member 3R (however, in a case when a general term is used, a start-up member 3) are assigned.

For example, the power supplying inlet as the electric power connector according to the present invention is provided in vehicles (for example, hybrid cars or electric cars) comprising a chargeable electric storage device, and houses a receiving terminal (an internal electric terminal) wherein a supplying terminal (an external electric terminal) of an external power source (for example, a power source for domestic use, or a quick electric charger for exclusive use) which is not shown in the figures is connected. The power supplying inlet can be disposed in a concave portion with a door provided on an outside wall of the vehicle which is not shown in the figures in the same manner as a well-known power supplying inlet in a gasoline vehicle and the like whose main power source is a conventional internal combustion engine.

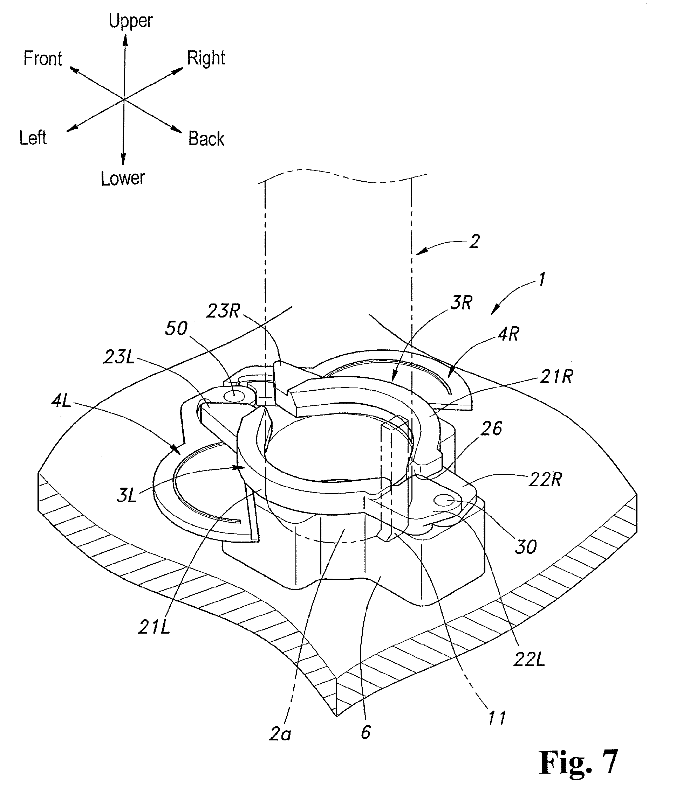

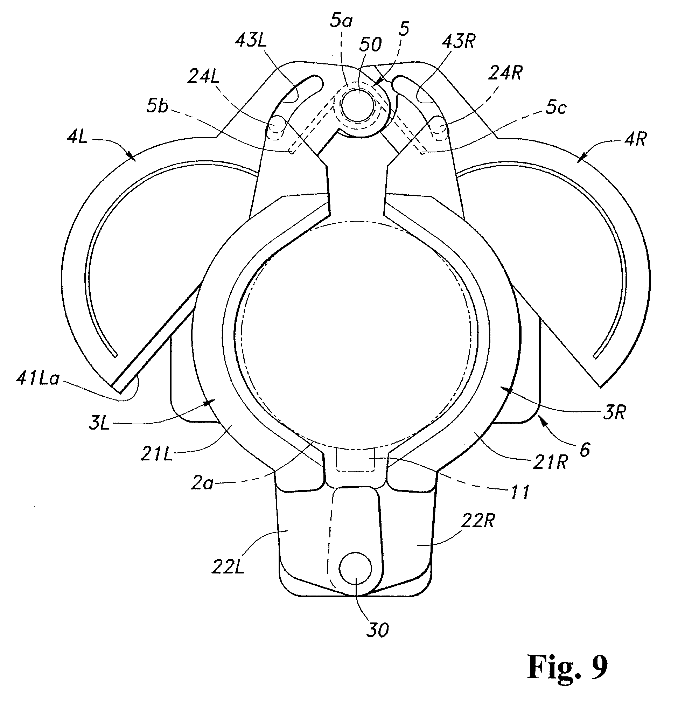

As shown in Fig. 1, a power supplying inlet 1 mainly comprises the start-up member 3 which is made from a resin, and is displaced by being pressed by a supplying nozzle 2 as an external connector housing the supplying terminal when the supplying terminal and the receiving terminal which are not shown in the figures are connected; a shutter member 4 which is made from the resin, and is displaced between an open position (see Figs. 7 and 9) interlocking with the start-up member 3 and exposing the receiving terminal, and a closed position (see Fig. 1) covering the receiving terminal; a torsion coil spring 5 (see Fig. 9) urging the shutter member 4 to a closed position side; and a base member 6 which is made from the resin, and supports the aforementioned respective members.

The supplying nozzle 2 includes an outer shell which is made from the resin and has a cylindrical form, and the supplying terminal is exposed from an opening (not shown in the figures) on a lower side of an end portion 2a which is inserted into the power supplying inlet 1. Also, on an outer peripheral surface of the end portion 2a, there is formed a convex portion 11 extending in an up-and-down direction (an axis direction of the supplying nozzle 2). Incidentally, regarding the supplying terminal, for example, a well-known structure, which comprises a plurality of terminals such as a charging terminal connected to an electric power line, a signal terminal connected to a signal line, and the like, can be adopted arbitrarily, thereby omitting a detailed explanation here.

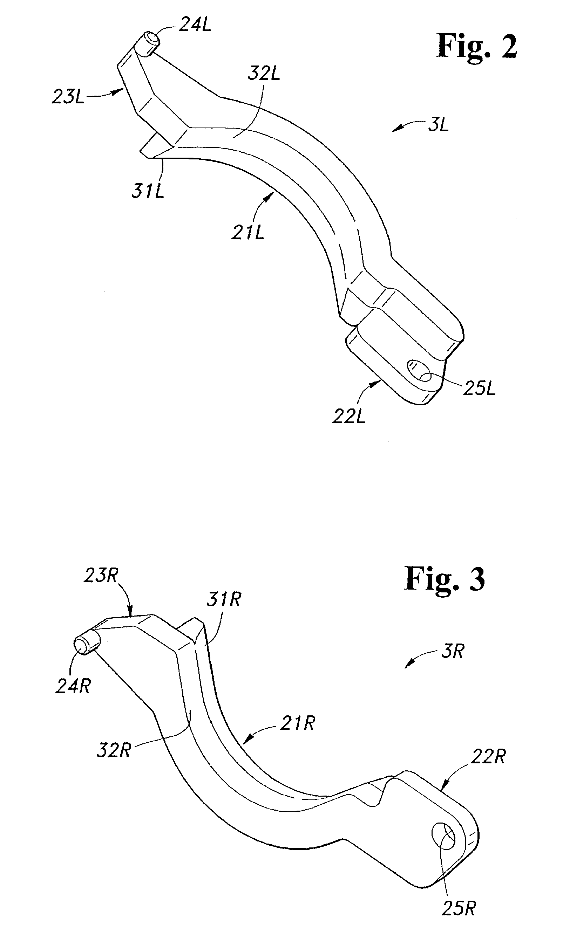

The start-up member 3 has an approximately annular shape, and comprises a pair of split start-up members 3L and 3R mutually having an approximately symmetrical shape. As shown in Figs. 2 and 3, the split start-up members 3L and 3R include half-annular abutting portions 21L and 21R wherein the end portion 2a of the supplying nozzle 2 is pressed. As for a substantial inner diameter of the start-up member 3 which is set by an inner peripheral surface of the abutting portions 21L and 21R, at least one portion thereof is set slightly smaller than an outer diameter of the end portion 2a. Base end portions 22L and 22R, which continue into a back side of the abutting portions 21L and 21R, are turnably supported at a turning axis 30 projected to an upper side from a back portion upper surface of the base member 6 through axis holes 25L and 25R. Also, on a lower surface of free end portions 23L and 23R which continue into a front side of the abutting portions 21L and 21R, there are projected cam pins 24L and 24R downwardly.

The start-up member 3 includes a concave portion 26 which is formed by separating back ends of the abutting portions 21L and 21R. The concave portion 26 has a size corresponding to the convex portion 11 of the supplying nozzle 2, and the convex portion 11 is inserted into the concave portion 26 to allow a positional alignment in a circumferential direction between the power supplying inlet 1 and the supplying nozzle 2.

Also, the abutting portions 21L and 21R include tapered portions 31L and 31R wherein at least one portion (here, only the upper side) of the respective inner peripheral surfaces inclines in such a way as to gradually expand a diameter outwardly. While the substantial inner diameter of the start-up member 3 is set slightly larger than the outer diameter of the end portion 2a of the supplying nozzle 2 in the tapered portions 31L and 31R, the substantial inner diameter of the start-up member 3 is set smaller than the outer diameter of the end portion 2a of the supplying nozzle 2 in linear portions 32L and 32R which continue into an inside of the tapered portions 31L and 31R.

Also, as shown in Fig. 1, the base end portions 22L and 22R are disposed mutually in a position which differs in the up-and-down direction, and the split start-up members 3L and 3R are attached to the turning axis 30 in such a way that the base end portions 22L and 22R overlap up and down in a state wherein centers of the respective axis holes 25L and 25R are conformed.

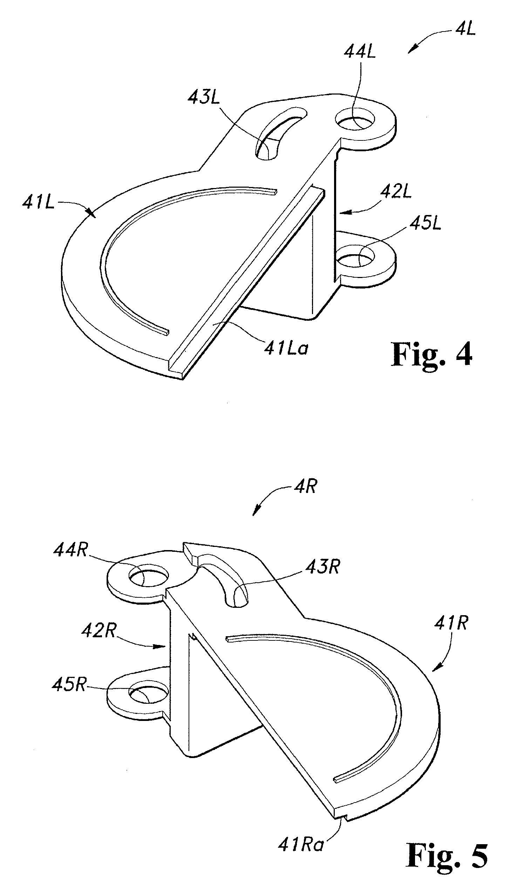

The shutter member 4 has an approximately disk-like shape, and comprises a pair of split shutter members 4L and 4R mutually having the approximately symmetrical shape. As shown in Figs. 4 and 5, the split shutter members 4L and 4R include semi-disk-like door portions 41L and 41R which cover the receiving terminal. On upper walls of base end portions 42L and 42R which continue into a front side of the door portions 41L and 41R, there are formed cam grooves 43L and 43R respectively extending in a front-back direction. The cam grooves 43L and 43R have a circular shape which respectively becomes a convex shape in left and right directions, and constitute a cam mechanism together with the cam pins 24L and 24R of the split start-up members 3L and 3R which are inserted into the respective cam grooves 43L and 43R. As mentioned later, the cam mechanism allows the shutter member 4 and the start-up member 3 to interlock.

In the left door portion 41L, a lower surface side of a linear border portion 41La which abuts against the right door portion 41R protrudes to a right door portion 41R side. On the other hand, in the right door portion 41R, an upper surface side of a linear border portion 41Ra which abuts against the left door portion 41L protrudes to a left door portion 41L side. Thereby, in a case where the shutter member 4 is in the closed position, the door portions 41L and 41R stably fit in a state wherein the linear border portion 41La and 41Ra mutually overlap up and down.

Also, in inwardly-bulging portions which are respectively formed in front ends of the upper walls and lower walls of the base end portions 42L and 42R, there are respectively formed a pair of axis holes 44L and 45L, and axis holes 44R and 45R. The base end portions 42L and 42R are turnably supported at a turning axis 50 (see Fig. 1) which is projected to the upper side from the base member 6 through the axis holes 44L and 45L and the axis holes 44R and 45R, respectively. The upper wall and the lower wall of the base end portion 42R are disposed in a position which respectively differs in the up-and-down direction relative to the upper wall and the lower wall of the base end portion 42L. The split shutter members 4L and 4R are attached to the turning axis 50 in such a way that the upper wall of the base end portion 42R overlaps the lower side of the upper wall of the base end portion 42L, and also that the lower wall of the base end portion 42R overlaps the upper side of the lower wall of the base end portion 42L in a state wherein centers of the axis holes 44R and 45R are respectively conformed to the axis holes 44L and 45L.

As shown in Fig. 9, in the torsion coil spring 5, a coil portion 5a thereof is attached to an outer periphery of the turning axis 50, and an arm portion 5b formed on one end side of the coil portion 5a is fixed to the left sprit shutter member 4L, and also an arm portion 5c formed on the other end side of the coil portion 5a is fixed to the right split shutter member 4R. Thereby, the torsion coil spring 5 urges the split shutter members 4L and 4R in such a way as to turn the split shutter members 4L and 4R to the closed position side.

The base member 6 houses the receiving terminal in a cylindrical space which is not shown in the figures and formed in an inside of the base member 6. Incidentally, regarding the receiving terminal, for example, the well-known structure, which comprises a plurality of the terminals such as the charging terminal which can be connected to the charging terminal on a supplying terminal side, the signal terminal which can be connected to the signal terminal on the supplying terminal side, and the like, can be adopted arbitrarily, thereby omitting the detailed explanation here.

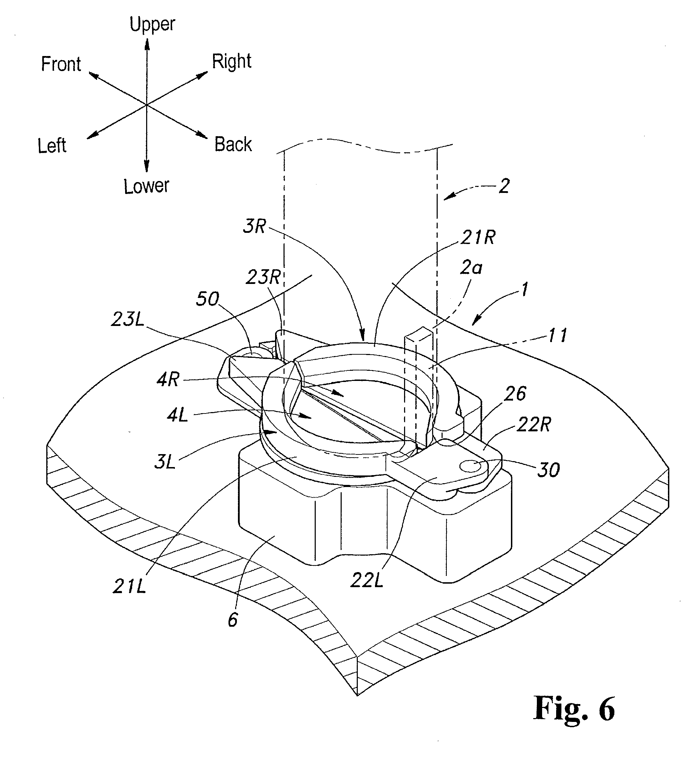

Next, with reference to Figs. 6 to 9, a movement wherein the supplying nozzle 2 is inserted into the power supplying inlet 1 with the aforementioned structure (i.e., the supplying terminal and the receiving terminal are electrically connected) will be explained.

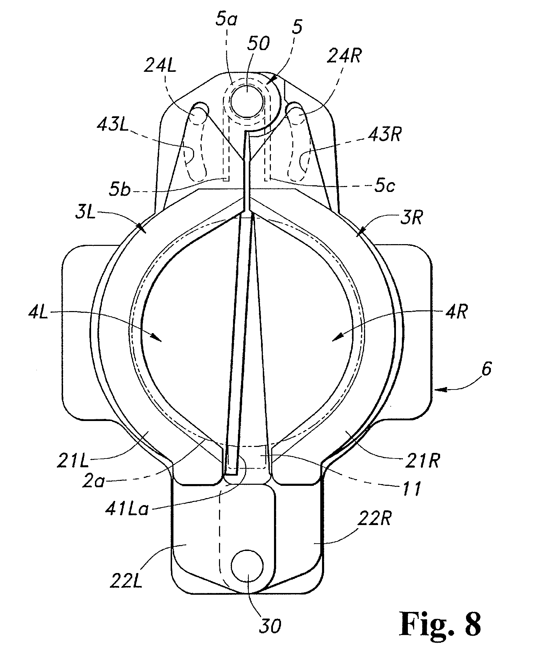

When a user moves the supplying nozzle 2 downwardly in such a way as to insert the supplying nozzle 2 into the power supplying inlet 1 from a state shown in Fig. 1, first, as shown in Figs. 6 and 8, an outer peripheral border of the end portion 2a thereof abuts against the abutting portions 21L and 21R of the split start-up members 3L and 3R. At that time, the outer peripheral border of the end portion 2a abuts against the tapered portions 31L and 31R of the abutting portions 21L and 21R. Thereby, a further downward movement of the end portion 2a is guided by the tapered portions 31L and 31R of the abutting portions 21L and 21R.

Also, at that time, the abutting portions 21L and 21R are pressed in a direction (a left or right direction) wherein the abutting portions 21L and 21R are mutually separated by the outer peripheral border of the end portion 2a of the supplying nozzle 2. Thereby, the split start-up members 3L and 3R which have been located in an initial position of Fig. 1 start to turn respectively in the left or right direction at a center of the turning axis 30. A displacement of the cam pins 24L and 24R accompanied by the turning of the split start-up members 3L and 3R acts on the cam grooves 43L and 43R, so that the split shutter members 4L and 4R start to turn respectively in the left or right direction by interlocking with the split start-up members 3L and 3R.

Next, when a user further moves the supplying nozzle 2 downward to the power supplying inlet 1, as shown in Figs. 7 and 9, the abutting portions 21L and 21R reach a start-up position by further turning respectively in the left or right direction at the center of the turning axis 30, and the inner diameter of the start-up member 3 is expanded up to a degree to allow the supplying nozzle 2 to be inserted. The displacement of the cam pins 24L and 24R accompanied by the further turning of the split start-up members 3L and 3R acts on the cam grooves 43L and 43R, so that the split shutter members 4L and 4R turn further respectively in the left or right direction by interlocking with the split start-up members 3L and 3R, and move up to the open position. As a result, the receiving terminal which is not shown in the figures is exposed, and finally, the receiving terminal and the supplying terminal of the supplying nozzle 2 are electrically connected to allow the electric storage device to be charged.

On completion of the charging of the electric storage device, the user moves the supplying nozzle 2 upwardly in such a way as to pull out of the power supplying inlet 1 so as to be capable of releasing a connection between the receiving terminal and the supplying terminal. At that time, a pressing force of the supplying nozzle 2 relative to the abutting portions 21L and 21R is released, so that the split shutter members 4L and 4R move up to the closed position again by an urging force of the torsion coil spring 5. A displacement of the cam grooves 43L and 43R accompanied by the turning of the split shutter members 4L and 4R acts on the cam pins 24L and 24R, so that the split start-up members 3L and 3R turn respectively in the left or right direction by interlocking with the split shutter members 4L and 4R, and move up to the initial position again. As a result, the receiving terminal which is not shown in the figures is covered by the shutter member 4, thereby preventing from contacting with outside, or preventing water, dust, and the like from entering.

The power supplying inlet 1 with the aforementioned structure has a structure in which the shutter member 4 is provided and is displaced by interlocking with the start-up member 3 which is displaced by being pressed by the supplying nozzle 2, so that without requiring a special operation of a user, at a starting time of the charging (when the supplying terminal and the receiving terminal are connected), the shutter member 4 moves to the open position by abutting against the supplying nozzle 2 of the start-up member 3 to expose the receiving terminal, and also on completion of the charging (when the supplying terminal and the receiving terminal are disconnected), due to the urging of the torsion coil spring 5, the shutter member 4 moves up to the closed position to cover the receiving terminal. In that case, the displacement of the shutter member 4 is carried out on a plane surface perpendicular to an abutting direction (the up-and-down direction) of the supplying nozzle 2, so that there is the advantage that a size of the power supplying inlet 1 in the abutting direction of the supplying nozzle 2 can be reduced. Also, since the shutter member 4 does not directly abut against the supplying nozzle 2, even in a case where opening and closing of the shutter member 4 are repeated, there is no decline in performance due to a deformation thereof and the like.

Although the present invention has been explained in detail based on the specific embodiment, the embodiment is absolutely an illustrated example, and the present invention is not limited to the aforementioned embodiment. In the embodiment described hereinabove, although the supplying nozzle 2 with the cylindrical form is shown as the example of the external connector, a shape, size, and the like of the external connector can be modified variously provided that the external connector can be connected at least to the electric power connector. Also, the electric power connector according to the present invention can be used not only for the aforementioned receiving terminal, but also for the supplying terminal. Specifically, the electric power connector according to the present invention is not limited to a structure of housing the receiving terminal of a receiving―side device (the vehicle in the aforementioned embodiment), and can be attained as a structure of housing, for example, an electric terminal in the power source for domestic use, or the quick electric charger for exclusive use.

### EXPLANATION OF SYMBOLS

- 1: a power supplying inlet (an electric power connector)
- 2: a supplying nozzle (an external connector)
- 3: a start-up member
- 3L, 3R: split start-up members
- 4: a shutter member
- 4L, 4R: split shutter members
- 5: a torsion coil spring (an urging device)
- 6: a base member
- 21L, 21R: abutting portions
- 24L, 24R: cam pins (cam mechanisms)
- 30: a turning axis
- 43L, 43R: cam grooves (cam mechanisms)
- 50: a turning axis

## Claims

1. An electric power connector for housing an internal electric terminal connecting to an external electric terminal of an electric supplying end or an electric receiving end, comprising:
a start-up member adapted to displace by pressing an external connector housing the external electric terminal when connecting the external electric terminal and the internal electric terminal;
a shutter member interlocking with the start-up member to displace between an open position exposing the internal electric terminal and a closed position covering the internal electric terminal; and
an urging device urging the shutter member to a closed position side.

2. An electric power connector according to claim 1, wherein the shutter member is displaced on a plane perpendicular to an abutting direction of the external connector.

3. An electric power connector according to claim 1, wherein the shutter member rotates by interlocking with the start-up member by a cam mechanism.

4. An electric power connector according to claim 1, wherein the shutter member includes two split shutter members, and the split shutter members respectively turn in a direction of separating from each other by interlocking with the start-up member.

5. An electric power connector according to claim 1, wherein the start-up member is adapted to abut against an outer peripheral border portion of the external connector when connecting an electric supplying terminal and the internal electric terminal.

6. An electric power connector according to claim 1, wherein the start-up member includes two split start-up members, and the split start-up members respectively turn in the direction of separating from each other when the split start-up members is adapted to abut against the external connector.
